# EUROPÄISCHE PATENTSCHRIFT

(11) **EP 0 816 273 B1**
(45) Veröffentlichungstag und Bekanntmachung des Hinweises auf die Patenterteilung: **02.01.2002**
(21) Anmeldenummer: 97109463.6
(22) Anmeldetag: 11.06.1997
(51) Int. Cl.: B65H 31/30, B65H 29/24

(54) **Verfahren und Vorrichtung zur Förderung von Gegenständen**
Method of and device for transporting objects
Procédé et dispositif pour transporter des objets

(30) Priorität: 26.06.1996 DE 19625470
(43) Veröffentlichungstag der Anmeldung: 07.01.1998
(73) Patentinhaber: BIELOMATIK LEUZE GmbH + Co., D-72639 Neuffen (DE)
(72) Erfinder: Trefz, Wolfgang, 72770 Reutlingen (DE); Klein, Hansjörg, 73773 Aichwald (DE); Bohnaker, Hans-Martin, 73277 Owen/Teck (DE)
(74) Vertreter: Patentanwälte Ruff, Wilhelm, Beier, Dauster & Partner

(56) Entgegenhaltungen:
- DE-A- 3 612 021
- FR-A- 2 392 907
- GB-A- 2 282 364

## Beschreibung

Die vorliegende Erfindung betrifft ein Verfahren und eine Vorrichtung zur Förderung von Gegenständen, insbesondere Blattstapeln, nach den Oberbegriffen der Ansprüche 1, 6, 7 und 14.

Derartige Fördervorrichtungen und -verfahren werden dazu eingesetzt, um z.B. bei Papier-Kleinformatquerschneidern, in denen aus einer breiten Papierbahn in zahlreichen Nutzen nebeneinander Blattstapel gebildet werden, beispielsweise Stapel von Kopier- oder Schreibpapier, die in ungleichmäßigen Abständen aufgestauten Blattstapel aus der Verarbeitungsmaschine abzutransportieren und bis zu einer Weiterverarbeitung der Blattstapel, beispielsweise einer Verpackung, die ungleichmäßigen Abstände auszugleichen.

Da die Weiterverarbeitung dieser Blattlagen es normalerweise erfordert, daß diese auf einen weitgehend konstanten Abstand auseinandergezogen kontinuierlich ankommen, ist zwischen dem Querförderer und der Weiterverarbeitung eine Staustrecke eingeschaltet, in der die einzelnen Blattlagengruppen so aufeinander auflaufen können, daß sie temporär eine lückenlose Reihe bilden, um dann auf einem Vereinzelungsförderer, der an die Staustrecke anschließen kann, auf den konstanten Abstand auseinandergezogen zu werden.

Um die zunächst unterschiedlich beabstandeten Blattstapel aneinander anzuschließen, sind bereits verschiedene Anordnungen von Anschließ- und Stauförderern bekannt geworden. Es wurde beispielsweise vorgeschlagen, einem kontinuierlich laufenden Bandförderer eine diesen überlappende Bandstrecke mit Ober- und Unterbändern nach Art einer Bandzange vorzuschalten. Anzuschließende Blattstapel werden zwischen den Ober- und Unterbändern gehalten und mit erhöhter Geschwindigkeit bewegt, so daß der Blattstapel an den letzten Blattstapel der vorhergehenden Gruppe lückenlos anschließt. Eine solche Vorrichtung ist aus der FR 2 392 907 A bekanntgeworden. Darin ist auch eine Saugunterstützung für eine bevorzugte Mitnahme der Gegenstände durch den Stauförderer erwähnt.

Aus der DE-36 12 021 geht ein Staufördersystem hervor, bei dem der Anschließförderer den Stauförderer überlappt und die einzelnen Staubänder in mehrere Abschnitte unterteilt sind, die in Abhängigkeit vom Vorbeilaufen der Blattlagen einzeln anhebbar sind, so daß sie die jeweiligen Blattlagen vom diskontinuierlich laufenden Anschließförderer abheben und auf die niedrigere Staugeschwindigkeit abbremsen. Hierzu ist jedoch eine mehrfache Unterteilung und eine aufwendige Steuerung sowie eine entsprechende Anhebemechanik für die Staubänder erforderlich.

Der Erfindung liegt die Aufgabe zugrunde, ein Verfahren und eine Vorrichtung zur Förderung von Gegenständen zu schaffen, die in einfacher Weise den Transport von Gegenständen, insbesondere Blattstapeln, auch aus empfindlichen Materialien mit hoher Genauigkeit ermöglichen, ohne die Oberfläche der Gegenstände zu beschädigen oder die Gegenstände zu verschieben.

Die Aufgabe wird durch die Merkmale der Ansprüche 1 6, 7 und 14 gelöst.

Die im Überlappungsbereich an sich indifferent auf dem Anschließförderer und dem Stauförderer liegenden Gegenstände, nämlich indifferent insofern, mit welchem der beiden Förderer ein Gegenstand im Überlappungsbereich bei unterschiedlichen Geschwindigkeiten der beiden Förderer mitlaufen soll, wird er jeweils durch die Blas- oder Saugluftbeaufschlagung an einen der beiden Förderer angekoppelt und von diesem mitgenommen, während der jeweils andere Förderer relativ zu dem Gegenstand ohne zu greifen durchlaufen kann. Gemäß einer Ausführungsform der Erfindung wird ein im Überlappungsbereich befind licher Gegenstand also zu jeder Zeit an einen der Förderer angesaugt, so daß seine Position durch die Stellung des jeweiligen Förderers bestimmt wird. Die Gegenstände werden dabei derart an den Anschließförderer und den Stauförderer angekoppelt, daß ein nachfolgender Gegenstand, der an einen vorausgeförderten angeschlossen werden soll, von dem Anschließförderer mit einer höheren Geschwindigkeit als der des Stauförderers im Überlappungsbereich der beiden Förderer gefördert wird, während der vorausgeförderte Gegenstand im Überlappungsbereich an den Stauförderer angekoppelt ist, wobei der schneller laufende Anschließförderer relativ zu diesem vorher geförderten Gegenstand ohne zu greifen durchgeht. Die Ankopplung der Gegenstände mittels Saugluft besitzt den Vorteil, daß die Mitnahme mit einem der Förderer einfach und sanft erfolgt, ohne zangenförmigen Druck auf die Gegenstände auszuüben oder durch ein Anheben der Gegenstände vom laufenden Förderer mit anderer Geschwindigkeit die Gefahr eines Verrutschens oder Verschiebens zu verursachen.

Durch die Saugluft wird die Haftwirkung auf den Förderern bzw. die Kontaktierung der Förderer durch die Gegenstände bestimmt, die sie in einem Staupunkt von dem Anschließförderer abkoppelt und an den Stauförderer ankoppelt.

Die die Reibungswirkung bestimmenden Bedingungen können dadurch verändert und die Gegenstände vom Anschließförderer ab- und an den Stauförderer angekoppelt werden, daß die Gegenstände im Bereich beider Förderer mit Saugluft beaufschlagt werden und nacheinander an den Anschließförderer und den Stauförderer, nämlich bis zum Erreichen des Staupunktes an den Anschließförderer und nach Erreichen des Staupunktes an den Stauförderer angesaugt werden.

Diese aufeinanderfolgende Doppelansaugung besitzt den Vorteil, daß ein Gegenstand jederzeit an einem der Anschließund Stauförderer haftet und seine Position jederzeit entsprechend der Stellung des jeweiligen Förderers bestimmt ist. Ferner kann der Gegenstand von dem Anschließförderer an den Stauförderer einfach durch Umschalten der Ansaugung von dem Anschließförderer auf den Stauförderer exakt zu einem vorgegebenen Zeitpunkt ohne zu rutschen übergeben werden.

In Weiterbildung der Erfindung erfolgt die Ansaugung eines Gegenstandes an den jeweiligen Förderer partiell in einem begrenzten Bereich des Förderers, insbesondere wird nur der Abschnitt des entsprechenden Förderers mit Saugluft beaufschlagt, indem der Gegenstand auf dem Förderer liegt. Die Saugluftbeaufschlagung des jeweiligen Gegenstandes wandert also mit dem Gegenstand mit.

Eine derartige partielle Saugluftbeaufschlagung reduziert das notwendige Saugluftvolumen. Insbesondere wird in dem Bereich des jeweiligen Förderers, in dem kein Gegenstand liegt, keine Falschluft angesaugt.

Bei einer Doppelansaugung der Gegenstände sowohl an den Anschließförderer als auch an den Stauförderer wandert also ein erstes Ansaugfeld im Bereich des Stauförderers mit dem vorausgeförderten Gegenstand mit und ein zweites Ansaugfeld wandert im Bereich des Anschließförderers mit dem nachfolgenden anzuschließenden Gegenstand mit, wobei die Grenze zwischen den beiden Saugfeldern zwischen den aneinander anzuschließenden Gegenständen liegt und vor dem nachfolgenden Gegenstand und nach dem voranlaufenden Gegenstand mitwandert.

Um die Reibungswirkung im Überlappungsbereich besser steuern zu können, können die Gegenstände im Bereich des jeweiligen Förderers, von dem die Gegenstände im Überlappungsbereich abzukoppeln sind, mit Blasluft beaufschlagt werden. Zwischen dem zu transportierenden Gegenstand und dem Anschließförderer bzw. dem Stauförderer, von dem der entsprechende Gegenstand nicht mitgenommen werden soll, wird also ein Luftkissen erzeugt. Ein derartiges Luftkissen verhindert darüber hinaus zuverlässig, daß die Oberfläche der Gegenstände von dem jeweils durchlaufenden Förderer beschädigt wird. Insbesondere in Endbereichen eines Förderers, in dem Beschädigungen der Oberfläche leicht auftreten können, ist dies von Vorteil.

Vorzugsweise wird die Blasluftbeaufschlagung auf jeweils einen Bereich des Anschließförderers und/oder des Stauförderers, insbesondere auf den Abschnitt, in dem der entsprechende Gegenstand liegt, begrenzt. Dies reduziert den notwendigen Blasluftstrom wesentlich.

Die Blasluftbeaufschlagung wandert dabei also mit dem jeweiligen Gegenstand mit.

Die Gegenstände können gemäß einer Ausführungsform der Erfindung in den Bereichen des Anschließförderers und des Stauförderers mit Blasluft beaufschlagt werden. Bei einer entsprechenden Saugluftbeaufschlagung im Bereich beider Förderer kann also jeder Gegenstand im Überlappungsbereich gleichzeitig mit Saug- und Blasluft beaufschlagt werden. Dabei wandert mit jedem Gegenstand ein Blasluftfeld und ein Saugluftfeld mit, wobei bei einem Paar aneinander anzuschließender Gegenstände die Saugluft- und Blasluftfelder bezüglich des Anschließförderers und des Stauförderers vertauscht werden.

Gemäß einer bevorzugten Ausführungsform der Erfindung wird ein voranlaufender Gegenstand durch den Stauförderer mit einer konstanten ersten Geschwindigkeit gefördert und ein anzuschließender nachlaufender Gegenstand in einem ersten Schritt durch den Anschließförderer mit einer größeren zweiten Geschwindigkeit gefördert und in einem zweiten Schritt kontinuierlich durch den Anschließförderer auf die langsamere erste Geschwindigkeit des Stauförderers verzögert. Die Geschwindigkeit des nachfolgenden Gegenstandes wird dabei relativ zu dessen jeweiliger Position derart koordiniert, daß der nachfolgende Gegenstand exakt im Staupunkt, d.h. in dem Punkt, in dem eine Vorderkante des nachfolgenden Gegenstandes an eine Hinterkante des vorausgeförderten Gegenstandes anschließt, die Geschwindigkeit des vorangeförderten Gegenstandes, nämlich des Stauförderers, erreicht. Die Gegenstände werden dadurch sanft ohne Stoß aneinander geführt. Darüber hinaus besitzt diese kontinuierliche Verzögerung des anzuschließenden Gegenstandes durch den Anschließförderer den Vorteil, daß der Gegenstand jederzeit zumindest an einem Förderer haftet und exakt geführt wird.

Mit einer Saugvorrichtung nach der Erfindung können die Gegenstände im Überlappungsbereich der Anschließ- und Stauförderer bei konstruktiv einfachem Aufbau an den gewünschten der beiden Förderer angekoppelt werden, ohne daß eine Mehrzahl zangenartig angeordneter Bänder notwendig oder eine mehrfache Unterteilung des Stauförderers mit einer entsprechenden Anhebemechanik erforderlich ist.

Um die Gegenstände im Überlappungsbereich von dem Aufschließförderer ab- und an den Stauförderer ankoppeln zu können, ist eine Schalteinheit vorgesehen, mit der die Saugvorrichtung zwischen zwei Einstellungen umgeschaltet werden kann, in denen ein Gegenstand entweder an dem

Anschließförderer oder dem Stauförderer haftet. Die Schalteinheitschaltet die Saugvorrichtung ein und aus bzw. zwischen dem Aufschließförderer und dem Stauförderer um.

Die Saugvorrichtung kann einen Ansaugbereich besitzen, der entsprechend der Anordnung des Anschließförderers und des Stauförderers, nur einem der beiden Förderer zugeordnet ist. Vorzugsweise jedoch besitzt die Saugvorrichtung für jeden der beiden Förderer einen Ansaugbereich.

Um den Ansaugbereich partiell auf einen Abschnitt des Anschließförderers und/oder des Stauförderers insbesondere entsprechend der jeweiligen Position des anzusaugenden Gegenstandes richten zu können und nur im Auflagebereich eines Gegenstandes eine Saugwirkung aufzubringen, sind dem Anschließförderer und/oder dem Stauförderer eine Reihe von Fluidkammern zugeordnet, die entlang der Förderrichtung unmittelbar aneinandergrenzen, vorzugsweise durch eine gemeinsame Trennwand voneinander getrennt sind, und durch Ventile mit einer Saugluftquelle verbindbar und von dieser absperrbar sind. Vorzugsweise ist dabei eine gemeinsame Saugleitung vorgesehen, an die die einzelnen Kammern mittels Anschlußleitungen und darin angeordneter Ventile angeschlossen sind.

Um den Ansaugbereich der Saugvorrichtung entsprechend der Position des anzusaugenden Gegenstandes mitwandern zu lassen, können die Kammern nacheinander durch Öffnen der Ventile mit der Saugluftquelle verbunden und sobald der entsprechende Gegenstand über den Bereich der entsprechenden Kammer hinausgefördert ist, durch Schließen der Ventile wieder abgeschaltet werden. Die Kammern können dabei einzeln oder gruppenweise mit der Saugluftquelle verbunden werden.

Um den Ansaugbereich mit dem Gegenstand mitwandern zu lassen, kann auch eine verfahrbare kammerartige Ansaugdüse vorgesehen sein. Die zuvor beschriebene Ausführung eines in mehrere Fluidkammern unterteilten Ansaugbereiches besitzt jedoch Vorteile hinsichtlich eines einfachen und stabilen Aufbaus und kann beispielsweise durch zusätzliche Unterteilungen quer zur Förderrichtung leichter an unterschiedliche Geometrien des anzusaugenden Gegenstandes angepaßt werden.

In Weiterbildung der Erfindung besitzt die Fördervorrichtung eine Steuereinrichtung zur Steuerung der Saugluftvorrichtung derart, daß in einem Bereich eines Gegenstandes nur einer der Anschließ- und Stauförderer, insbesondere jeweils nur im Bereich des anzusaugenden Gegenstandes entsprechend dessen jeweiliger Position, mit Saugluft beaufschlagt ist. Bei einer Ausführung der Saugvorrichtung mit einer Mehrzahl ventilbeschalteter Saugkammern können die Ventile von der Steuereinrichtung entsprechend angesteuert werden.

Um die zu transportierenden Gegenstände mit Blasluft zu beaufschlagen, besitzt die Fördervorrichtung in Weiterbildung der Erfindung eine Blasluftvorrichtung, wobei ein Austritt der Blasluftvorrichtung zur Begrenzung desselben auf einen Abschnitt des Schnellförderers und/oder des Stauförderers, insbesondere entsprechend der jeweiligen Position eines mit Blasluft zu beaufschlagenden Gegenstandes, eine Mehrzahl von Fluidkammern aufweisen kann, die entlang der Förderrichtung des entsprechenden Förderers aneinandergereiht sein können. Diese Fluidkammern können mit einer gemeinsamen Blasluftquelle verbunden und durch entsprechende Ventile an- und abschaltbar sein.

Vorzugsweise sind die Blasluftkammern identisch mit den Saugluftkammern, wobei die Kammern mittels entsprechender Ventile jeweils mit der Saugluftquelle oder der Blasluftquelle verbindbar sind.

Die Blasluftbeaufschlagung kann entweder auf nur einen der Förderer begrenzt sein, oder sie kann sowohl auf den Anschließförderer als auch auf den Stauförderer richtbar sein. In Verbindung mit der Anordnung der Saugvorrichtung sind verschiedene Kombinationen möglich.

Eine besonders einfache Anordnung ist eine Blasluftvorrichtung mit einem nur dem Stauförderer zugeordneten Austrittsbereich. Um einen Gegenstand durch den Anschließförderer mit schnellerer Geschwindigkeit als die des Stauförderers zu fördern und an einen vorausgeförderten Gegenstand anzuschließen wird der an den Anschließförderer angekoppelte Gegenstand im Bereich des Stauförderers mit Blasluft beaufschlagt, so daß dieser relativ zu dem Stauförderer auf einem Luftkissen gleitet. Sobald der Gegenstand den Staupunkt erreicht hat und der Anschließförderer und der Stauförderer mit gleicher Geschwindigkeit fördern, kann die Blasluftbeaufschlagung ausgeschaltet werden, so daß der Gegenstand auch im Bereich des Stauförderers mit diesem in Haftreibungseingriff gebracht wird.

In Weiterbildung der Erfindung kann die Blasluftvorrichtung auch einen dem Anschließförderer zugeordneten und einen dem Stauförderer zugeordneten Austritt aufweisen. Bei dieser Ausbildung der Blasluftvorrichtung wird nicht nur der anzuschließende, den Stauförderer überholende Gegenstand im Bereich des Stauförderers mit Blasluft beaufschlagt, sondern auch der vorausgeförderte, an den Stauförderer angekoppelte Gegenstand wird im Bereich des Anschließförderers mit Blasluft beaufschlagt, um zwischen diesem Gegenstand und dem schneller laufenden Anschließförderer ein Luftkissen zu schaffen. Keiner der Gegenstände gleitet dabei unmittelbar auf einem mit einer anderen Geschwindigkeit laufenden Förderer. Dies besitzt den Vorteil, daß die Oberfläche des Gegenstandes bestmöglich vor Beschädigungen geschützt ist und die Gefahr, daß der Gegenstand durch Kontakt mit unterschiedlich schnell sich bewegenden Förderoberflächen verrutscht oder verschoben wird, vermindert ist.

Vorzugsweise ist eine Steuereinrichtung zur Steuerung der Blasluftvorrichtung vorgesehen, derart, daß in einem Bereich eines Gegenstandes nur der Anschließförderer oder der Stauförderer, vorzugsweise nur im Bereich des Gegenstandes entsprechend dessen jeweiliger Position, mit Blasluft beaufschlagt ist. Bei einem in einer Mehrzahl von Fluidkammern unterteilten Austritt der Blasluftvorrichtung sind also nur jeweils die Blasluftkammern aktiviert, im Bereich derer sich der entsprechende Gegenstand jeweils befindet. In Verbindung mit der Saugluftvorrichtung sind dann im Bereich eines Gegenstandes die dem einen Förderer zugeordnete Fluidkammer oder Gruppe von Fluidkammern mit Saugluft beaufschlagt und die dem anderen Förderer zugeordnete Fluidkammer oder Gruppe von Fluidkammern mit Blasluft beaufschlagt. Die Steuerung der Saugluft- bzw. Blasluftbeaufschlagung kann durch entsprechende Ansteuerung der Ventile erfolgen.

Um die Saugluftbeaufschlagung bzw. die Blasluftbeaufschlagung mit dem sich in Förderrichtung bewegenden Gegenstand mitwandern lassen zu können, kann die Steuereinrichtung mit einer Erfassungsvorrichtung zur Erfassung der Position der Gegenstände verbunden sein, wobei vorzugsweise die Erfassungsvorrichtung jeweils Antriebseinrichtungen des Anschließförderers und/oder des Stauförderers zugeordnete Drehgeber zur mittelbaren Bestimmung der Position der Gegenstände aufweist. Diese Drehgeber können eine Doppelfunktion besitzen. Zum einen dienen sie der Bestimmung der Position der Gegenstände und zum anderen einer rückkoppelnden Steuerung der Anschließ- bzw. Stauförderer, insbesondere des Anschließförderers, dessen Geschwindigkeit variabel in Abhängigkeit der Position des anzuschließenden Gegenstandes gesteuert ist.

Gemäß einer vorteilhaften Ausführung der Erfindung sind der Anschließförderer und der Stauförderer Bandförderer.

Die Förderebenen des Anschließförderers und des Stauförderers können auf unterschiedlichem Niveau liegen, beispielsweise kann die Förderebene des Stauförderers zumindest im unbelasteten Zustand geringfügig über der des Anschließförderers liegen, so daß ein zu transportierender Gegenstand im Überlappungsbereich der beiden Förderer ohne Saugluftbeaufschlagung von dem Stauförderer auch bei unterschiedlicher Geschwindigkeit des Anschließförderers mitgenommen wird. Vorzugsweise jedoch liegen die Förderebene des Anschließförderers und die Förderebene des Stauförderers in einer gemeinsamen Ebene. Der Förderer, an den ein Gegenstand nicht angekoppelt ist, bildet dabei eine Auflage, über die der Gegenstand geführt wird. Dies besitzt den Vorteil, daß die zu transportierenden Gegenstände gleichmäßig abgestützt sind.

Vorteilhafterweise sind eine Förderoberfläche des Anschließförderers und eine Förderoberfläche des Stauförderers glatt. Die Ankopplung eines Gegenstandes erfolgt dabei vorrangig durch die Ansaugung des jeweiligen Gegenstandes an die entsprechende Förderoberfläche mittels der Saugluftvorrichtung. Hierdurch ist der Reibungswiderstand eines sich mit relativ zu einem Gegenstand unterschiedlicher Geschwindigkeit bewegenden Förderers klein. Dementsprechend ist die Oberfläche der Gegenstände vor Beschädigungen geschützt. Darüber hinaus bewirkt eine glatte Oberfläche der Förderer eine hohe Effektivität der Ansaugung der Gegenstände bzw. deren Beaufschlagung mit Blasluft.

Um die Fördergeschwindigkeiten der Förderer individuell steuern zu können, können der Anschließförderer und der Stauförderer vorzugsweise jeweils eine eigene Antriebseinrichtung aufweisen, wobei die Antriebseinrichtung des Anschließförderers mit einer höheren Ausgangsgeschwindigkeit als die Antriebseinrichtung des Stauförderers betreibbar ist. Als Ausgangsgeschwindigkeit ist dabei die auf die jeweiligen Fördermittel des Anschließ- bzw. Stauförderers, beispielsweise Förderbänder, wirkende, beispielsweise mittels eines Getriebes von einem Elektromotor umgesetzte Geschwindigkeit zu verstehen. Der Anschließförderer ist also mit einer höheren Geschwindigkeit betreibbar als der Stauförderer. Insbesondere ist der Stauförderer mit konstanter Geschwindigkeit und der Anschließförderer mit variabler Geschwindigkeit, deren Maximalwert über der konstanten Geschwindigkeit des Stauförderers liegt, betreibbar.

Vorzugsweise ist zwischen dem Anschließförderer und dem Stauförderer eine Kopplungseinrichtung, insbesondere eine Freilaufkupplung, zur vom Antrieb des Anschließförderers überfahrbaren Kopplung des Anschließförderers an die Antriebseinrichtung des Stauförderers vorgesehen. Der Anschließförderer hat hierdurch zumindest immer die Geschwindigkeit des Stauförderers, auch bei abgeschaltetem Antrieb des Anschließförderers. Bei Zuschaltung der Antriebseinrichtung des Anschließförderers kann dieser auf eine höhere Geschwindigkeit als die des Stauförderers beschleunigt werden. Vorteilhafterweise ist durch die Kopplungseinrichtung ein exakter Synchronlauf der beiden Förderer erreichbar, so daß im Staupunkt die Übergabe eines Gegenstandes vom Anschließförderer an den Stauförderer, nämlich die Abkopplung des Gegenstandes vom Anschließförderer und dessen Ankopplung an den Stauförderer, ohne Relativgeschwindigkeit der Förderoberflächen der beiden Förderer zueinander erfolgt.

Der Anschließvorgang eines Gegenstandes im Überlappungsbereich kann auf unterschiedliche Art und Weise gesteuert werden. Der Anschließförderer kann zunächst mit der Geschwindigkeit des Stauförderers betrieben und der Gegenstand entsprechend der Staugeschwindigkeit in den Überlappungsbereich der beiden Förderer transportiert werden, wobei der Gegenstand dann im Überlappungsbereich durch den Anschließförderer beschleunigt und mit relativ zu dem Stauförderer höherer Geschwindigkeit auf den voranlaufenden Gegenstand angeschlossen wird. Vor Erreichen des Staupunktes wird der Gegenstand durch den Anschließförderer kontinuierlich von der erhöhten Geschwindigkeit auf die Geschwindigkeit des Stauförderers verzögert, die dieser dann exakt im Staupunkt erreicht.

Vorzugsweise wird der Gegenstand bereits vor Erreichen des Überlappungsbereiches des Anschließförderers und des Stauförderers auf die erhöhte Geschwindigkeit beschleunigt und mit dieser in den Überlappungsbereich hineingefördert, wobei vor Erreichen des Staupunktes der Gegenstand durch den Anschließförderer graduell auf die Geschwindigkeit des Stauförderers verzögert wird. Dies besitzt den Vorteil, daß der anzuschließende Gegenstand bereits mit erhöhter Geschwindigkeit in den Überlappungsbereich hineinläuft und nicht dort von der Staugeschwindigkeit auf die erhöhte Geschwindigkeit des Anschließförderers zu beschleunigen ist. Dementsprechend muß im Überlappungsbereich keine Haftreibung zwischen dem Gegenstand und dem Stauförderer überwunden werden.

Gemäß einer bevorzugten Ausführung der Erfindung ist stromauf des Anschließförderers ein diskontinuierlich betreibbarer Zuförderer vorgesehen, der vorzugsweise mit dem Anschließförderer eine gemeinsame Förderrichtung besitzt und mit variabler Geschwindigkeit, insbesondere in einem Bereich kleiner oder gleich der Geschwindigkeit des Anschließförderers betreibbar ist. Dabei können beispielsweise aus einer Papierverarbeitungsmaschine kommende Blattstapel auf den stehenden Zuförderer, insbesondere mittels entsprechender Greiferzangen gezogen werden, die dann durch den Zuförderer auf die erhöhte Geschwindigkeit des Anschließförderers beschleunigt werden und mit dieser Geschwindigkeit auf den Anschließförderer übergeben werden. Der Anschließförderer ist hierzu, bevor die vom Zuförderer kommenden Gegenstände den Anschließförderer erreichen, ebenfalls auf die erhöhte, d.h. gegenüber der Staufördergeschwindigkeit erhöhte Geschwindigkeit, beschleunigt worden.

In Weiterbildung der Erfindung besitzt der Anschließförderer zumindest ein Förderband und der Stauförderer zumindest zwei Förderbänder, wobei das zumindest eine Förderband des Anschließförderers zwischen den Förderbändern des Stauförderers angeordnet ist. Der Anschließförderer hat also weniger Förderbänder als der Stauförderer. Die außen angeordneten Förderbänder des Stauförderers wirken als Tisch und bilden eine Auflage, auf der die Gegenstände mit ihren Randbereichen aufliegen.

Das Gewicht der Gegenstände, insbesondere bei Blattstapeln unter Durchbiegen derselben, drückt auf das in der Mitte angeordnete Förderband des Anschließförderers und bewirkt eine gute Haftung an diesem.

Vorteilhafterweise kann der Anschließförderer auch mehr Förderbänder als der Stauförderer aufweisen. Der Anschließförderer weist dabei zumindest zwei Förderbänder auf, wobei das zumindest eine Förderband des Stauförderers im Überlappungsbereich zwischen den Förderbändern des Anschließförderers angeordnet ist. Bei einer Ansaugung der Gegenstände im Bereich des Anschließförderers besitzt diese Anordnung eine größere Ansaugfläche und dementsprechend eine gute Haftung der Gegenstände an dem Anschließförderer, was insbesondere für die Verzögerung der Gegenstände vor Erreichen des Staupunktes von Vorteil ist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung verwirklicht sein können.

Im nachfolgenden wird die Erfindung anhand eines Ausführungsbeispieles und zugehöriger Zeichnungen näher erläutert. In diesen zeigen:

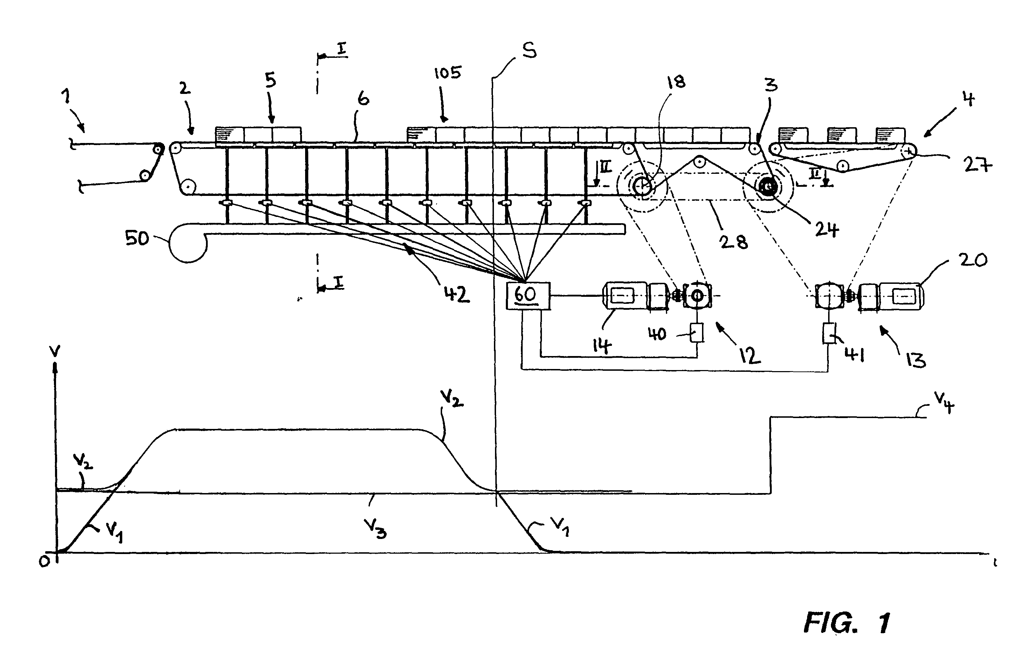

- Fig. 1: eine Seitenansicht einer Fördervorrichtung gemäß einem Ausführungsbeispiel der Erfindung in einer schematischen Darstellung, mit einem nur teilweise dargestelltem Zuförderer, einem Anschließförderer, der mit einem Stauförderer überlappt und einem daran anschließenden Vereinzelungsförderer sowie einer Saugvorrichtung mit einer Mehrzahl von Fluidkammern im Überlappungsbereich des Anschließ- und des Stauförderers, wobei anzuschließende Blattstapel auf dem Anschließförderer in einer ersten Stellung dargestellt sind und ein Geschwindigkeits-Zeit-Diagramm angegeben ist, das die Geschwindigkeit der einzelnen Förderer zeigt;

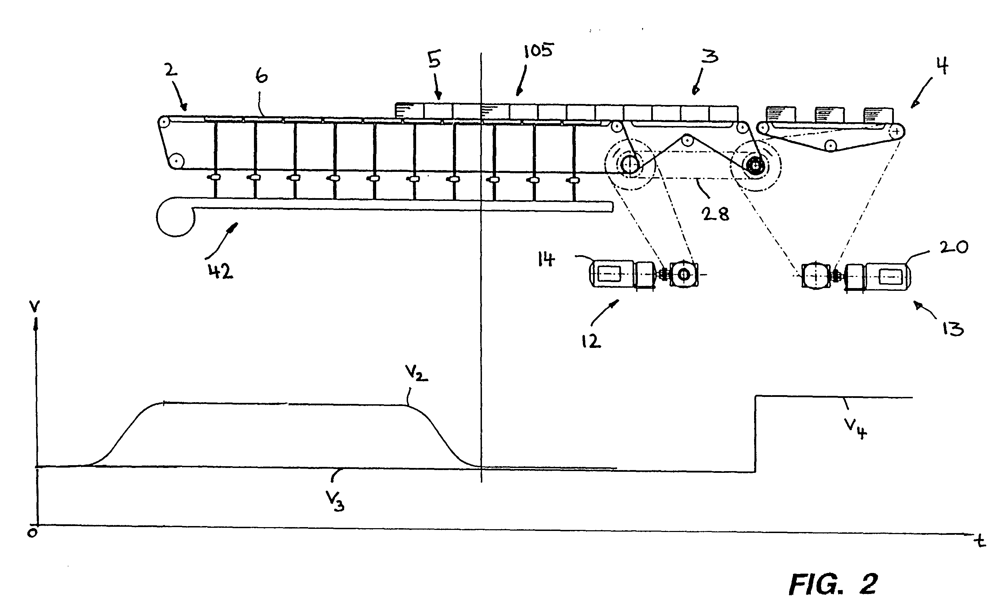

- Fig. 2: eine schematische Seitenansicht ähnlich Fig. 1 der Fördervorrichtung gemäß der Ausführung nach Fig. 1, wobei die Blattstapel in einer zweiten Stellung dargestellt sind, in der eine nachlaufende Gruppe anzuschließender Blattstapel einen Staupunkt erreicht hat, wobei der Zuförderer aus Fig. 1 nicht dargestellt ist;

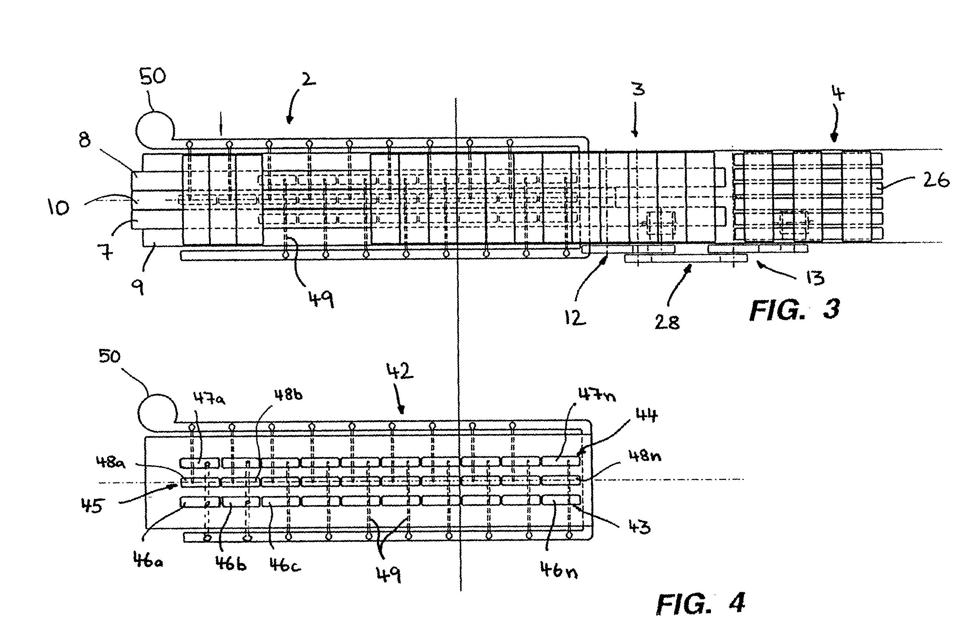

- Fig. 3: eine Draufsicht auf den Anschließförderer, den Stauförderer und den daran anschließenden Vereinzelungsförderer mit darauf liegenden Blattstapeln in einer Stellung gemäß Fig. 1;
- Fig. 4: eine Draufsicht auf eine Anordnung von Fluidkammern zur Beaufschlagung der Gegenstände mit Saugluft und Blasluft, wobei die Fluidkammern mittels Anschlußleitungen und darin angeordneten Ventilen an eine umlaufende Saugleitung einer Saugvorrichtung angeschlossen sind, während eine Blasluftleitung einer Blasluftvorrichtung nicht dargestellt ist;

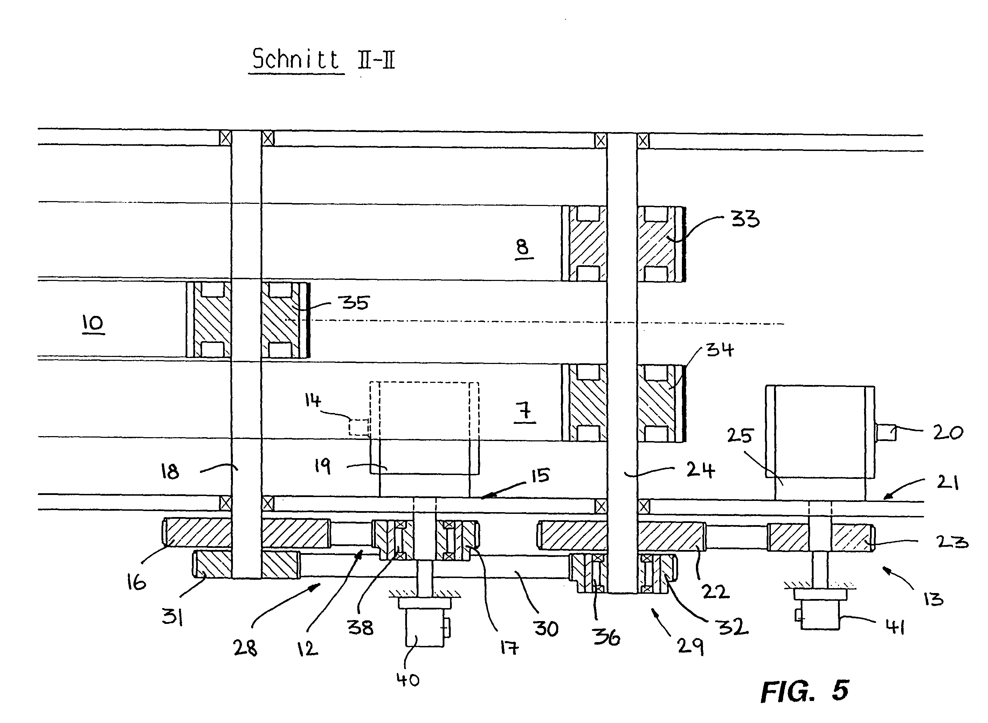

- Fig. 5: eine Schnittansicht entlang der Linie II-II in Fig. 1, die Antriebseinrichtungen des Anschließförderers und des Stauförderers sowie ein Kopplungsgetriebe mit einer Freilaufkupplung zwischen beiden Antriebseinrichtungen zeigt;

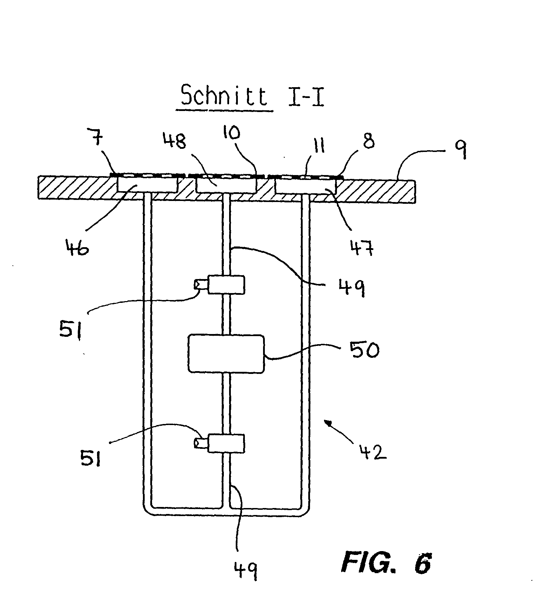

- Fig. 6: eine Schnittdarstellung entlang der Linie I-I in Fig. 1, die eine Saugvorrichtung mit zugehörigen Saugkammern und darüber laufenden Förderbändern des Anschließförderers und des Stauförderers sowie mit den Fluidkammern verbundene Anschlußleitungen mit darin angeordneten Ventilen zeigt.

Stromabwärts an einen nur schematisch angedeutet dargestellten Zuförderer 1 anschließend ist ein Anschließförderer 2 angeordnet. Mit dem Anschließförderer 2 überlappt ein sich weiter stromabwärts erstreckender Stauförderer 3, an den ein Vereinzelungsförderer 4 stromabwärts anschließt (Fig. 1). Der Zuförderer 1, der Anschließförderer 2, der Stauförderer 3 und der Vereinzelungsförderer 4 fördern zu transportierende Gegenstände 5 in eine gemeinsame Förderrichtung, nämlich gemäß Fig. 1 von links nach rechts, und besitzen jeweils eine Förderebene, die alle in einer gemeinsamen Förderebene 6 liegen. Als Förderer 1 bis 4 sind jeweils Bandförderer mit entsprechenden Förderbändern vorgesehen.

Wie in Fig. 3 gezeigt ist, besitzt der Stauförderer 3 zwei Förderbänder 7 und 8, die voneinander beabstandet sind und seitlich nach außen an einen Fördertisch 9 angrenzen. Der Anschließförderer 2 besitzt nur ein Förderband 10, das zwischen den beiden Förderbändern 7 und 8 des Stauförderers 3 angeordnet ist und sich mit den Förderbändern 7 und 8 des Stauförderers 3 derart überlappt, daß der gesamte Förderweg des Anschließförderers 2 von der gleichen Linie wie der Stauförderer 3 ausgehend ganz im Bereich des Förderweges des Stauförderers 3 liegt, der sich darüber hinaus stromabwärts erstreckt. Die Förderoberfläche der Förderbänder 7 und 8 des Stauförderers 3 und des Förderbandes 10 des Anschließförderers 2 sind verhältnismäßig glatt und liegen in einer gemeinsamen Ebene. Um die auf den Förderbändern 7 und 8 sowie 10 des Anschließ- und Stauförderers 2 bzw. 3 mit Saugluft oder Blasluft beaufschlagen zu können, wie später noch näher erläutert werden wird, besitzen die Förderbänder 7 und 8 sowie 10 jeweils Durchgangsausnehmungen 11 (Fig. 6), durch die Luft gesaugt oder geblasen werden kann. Die Förderbänder 7 und 8 sowie 10 sind also als Saugbänder ausgebildet.

Wie in Fig. 1 und 5 gezeigt ist, besitzen sowohl der Anschließförderer 2 als auch der Stauförderer 3 eine eigene Antriebseinrichtung 12 bzw. 13.

Die Antriebseinrichtung 12 des Anschließförderers 2 besitzt einen Elektromotor 14 der mittels eines Getriebes 15, insbesondere eines Ketten- oder Riementriebes, vorzugsweise Zahnriementriebes, mit zugehörigen Ritzeln bzw. Riemenscheiben 16 und 17 auf eine das Förderband 10 antreibende Antriebswelle 18 wirkt. Zwischen den Motor 14 und den Zahnriementrieb kann ein Untersetzungs- bzw. Übersetzungsgetriebe 19 geschaltet sein.

Der Elektromotor 14 ist mit variabler Drehzahl betreibbar, so daß das Förderband 10 ebenfalls mit unterschiedlicher Geschwindigkeit betreibbar ist. Dies ermöglicht es, einen Gegenstand im Bereich des Anschließförderers 2 mit unterschiedlicher Geschwindigkeit zu fördern und an einen mit dem Stauförderer vorausgeförderten Gegenstand anzuschließen, wie später noch näher erläutert werden wird.

Die Antriebseinrichtung 13 des Stauförderers 3 besitzt ebenfalls einen Elektromotor 20, der über ein Getriebe 21, insbesondere einen Ketten- oder Riementrieb, vorzugsweise Zahnriementrieb mit zugehörigen Ritzeln bzw. Riemenscheiben 22 und 23 (Fig. 5) auf eine die Stauförderbänder 7 und 8 antreibende Antriebswelle 24 wirkt. Zwischen dem Zahnriementrieb und dem Elektromotor 20 kann ebenfalls ein vorgeschaltetes Getriebe 25 angeordnet sein.

Der Elektromotor 20 ist mit konstanter Drehzahl betreibbar, um die Stauförderbänder 7 und 8 mit im wesentlichen gleichbleibender Geschwindigkeit kontinuierlich anzutreiben.

Wie in Fig. 1 gezeigt ist, ist die Antriebseinrichtung 13 des Stauförderers 3 gleichzeitig mit einer die Förderbänder 26 des Vereinzelungsförderers 4 antreibenden Antriebswelle 27 verbunden, wobei der Antriebsstrang für den Vereinzelungsförderer 4 relativ zu dem Antriebsstrang für den Stauförderer 3 übersetzt ist, um die Förderbänder 26 des Vereinzelungsförderers 4 mit höherer Geschwindigkeit zu betreiben als die Stauförderbänder 7 und 8. Die Kopplung des Antriebs des Vereinzelungsförderers 4 mit dem Antrieb des Stauförderers 3 bewirkt einen stets gleichbleibenden Geschwindigkeitsunterschied zwischen dem Vereinzelungsförderer 4 und dem Stauförderer 3. Dies besitzt den Vorteil, daß die durch den Vereinzelungsförderer 4 vom Stauförderer 3 übernommenen und auseinandergezogenen Gegenstände stets den gleichen Abstand voneinander besitzen.

Die an sich voneinander unabhängigen Antriebseinrichtungen 12 und 13 des Anschließförderers 2 und des Stauförderers 3 sind durch eine Kopplungseinrichtung 28 miteinander verbunden (Fig. 1 und 5). Die Antriebswelle 18 des Anschließförderbandes 10 wird dabei von der Antriebswelle 24 der Stauförderbänder 7 und 8 mitgenommen, kann sich jedoch auch schneller als diese drehen. Hierzu sind die Antriebswellen 18 und 24 über einen Zahnriementrieb 30 mit zugehörigen, an den Antriebswellen 18 und 24 befestigten Riemenscheiben 31 und 32 unter Zwischenschaltung einer Freilaufeinrichtung 29 miteinander verbunden. Anstelle des Zahnriementriebes 30 könnte auch eine andere getriebliche Verbindung zwischen den beiden Antriebswellen 18 und 24 vorgesehen sein, die beschriebene Zahnriementriebanordnung besitzt jedoch Vorteile aufgrund des zu überbrückenden Achsabstandes. Die Riemenscheiben 31 und 32 besitzen bei gleichem Durchmesser der Antriebsscheiben 33, 34 und 35, über die die Staubänder 7 und 8 bzw. das Anschließförderband 10 laufen, den gleichen Durchmesser, so daß dann, wenn die Antriebswelle 18 des Anschließförderers 2 von der Antriebswelle 24 des Stauförderers 3 mitgenommen wird, der Anschließförderer 2 mit der gleichen Geschwindigkeit wie der Stauförderer 3 betrieben wird.

Die Freilaufeinrichtung 29 weist zum einen eine in dem Zahnriementrieb 30, insbesondere in der Riemenscheibe 32 angeordnete Freilaufkupplung 36 auf, die es erlaubt, daß die Antriebswelle 18 bei Antrieb durch den Motor 14 die Antriebswelle 24 überlaufen kann. Zum anderen weist die Freilaufeinrichtung 29 eine in den Antriebsstrang zwischen dem Elektromotor 14 und der Antriebswelle 18 geschaltete Freilaufkupplung 38 auf, um bei synchronem Antrieb der Antriebswelle 18 durch die Kopplungseinrichtung 28 den Elektromotor 14 nicht mitzuschleppen und diesen abschalten zu können. Die Freilaufkupplung 38 ist vorzugsweise in die Riemenscheibe 17 der Antriebseinrichtung 12 integriert (Fig. 5).

Der Antrieb des Anschließförderers 2 und des Stauförderers 3 ist also derart ausgebildet, daß bei Antreiben des Stauförderers 3 der Anschließförderer 2 synchron mitangetrieben wird und mit der Staufördergeschwindigkeit betrieben wird. Durch Zuschaltung des Antriebs 12 des Anschließförderers 2 kann dieser den Stauförderer 3 überlaufen und mit einer erhöhten Geschwindigkeit betrieben werden.

Um die Stellung des Anschließförderers 2 und des Stauförderers 3 jederzeit bestimmen und erfassen zu können, sind jeweils Lageerfassungsvorrichtungen vorgesehen, insbesondere sind den Antriebseinrichtungen 12 und 13 als Drehgeber Encoder 40 bzw. 41 zugeordnet, die der Stellung der Stauförderbänder 7 und 8 und des Anschließförderbandes 10 entsprechende Signale abgeben und mit einer Steuereinrichtung 60 verbunden sind.

Zur Ansaugung der transportierten Gegenstände im Überlappungsbereich an den Anschließförderer 2 bzw. den Stauförderer 3 ist im Überlappungsbereich eine Saugvorrichtung 42 vorgesehen (Fig. 1, 3 und 4).

Unter den Obertrümern der Stauförderbänder 7 und 8 und des Anschließförderbandes 10 sind jeweils Saugkästen 43, 44 und 45 angeordnet, die jeweils in eine Reihe einzelner Fluidkammern 46a bis 46n, 47a bis 47n und 48a bis 48n unterteilt sind, die entlang der Förderrichtung nacheinander unmittelbar aneinander anschließend unter den entsprechenden Förderbändern 7, 8 bzw. 10 angeordnet sind (Fig. 3, 4 und 6). Die Fluidkammern 46, 47, 48 sind jeweils voneinander getrennt und sind jeweils einzeln mittels Anschlußleitungen 49 an eine Vakuumringleitung 50 angeschlossen, die wiederum mit einer nicht dargestellten Saugquelle, wie beispielsweise einer Vakuumpumpe verbunden ist. In den Anschlußleitungen 49 ist jeweils eine Absperreinrichtung, insbesondere ein Schaltventil 51 angeordnet, so daß die einzelnen Fluidkammern 46, 47, 48 mit der Vakuumringleitung 50 verbunden und von dieser abgesperrt werden können. Die Schaltventile 51 sind von der Steuereinrichtung 60 ansteuerbar. Die Fluidkammern 46a bis 46n, 47a bis 47n und 48a bis 48n sind also jeweils einzeln mit Saugluft beaufschlagbar und dementsprechend kann in einzelnen Bereichen bzw. Abschnitten der Stauförderbänder 7 und 8 bzw. des Anschließförderbandes 10 eine Saugwirkung erreicht werden. Wie in Fig. 6 gezeigt ist, erstrecken sich die einzelnen Fluidkammern 46, 47 und 48 im wesentlichen über die gesamte Breite der zugehörigen Förderbänder 7, 8 und 10, so daß die jeweilige Saugwirkung über die gesamte Breite des jeweiligen Förderbandes gleichmäßig erreicht wird.

Zur Beaufschlagung der transportierten Gegenstände 5 im Überlappungsbereich des Anschließförderers 2 und des Stauförderers 3 mit Blasluft ist eine in den Zeichnungen nicht explizit vollständig dargestellte Blasluftvorrichtung vorgesehen. Diese Blasluftvorrichtung besitzt ähnlich der Saugluftvorrichtung eine Blasluftquelle, die mit einer Druckluftringleitung verbunden ist, an die wiederum die Fluidkammern 46a bis 46n, 47a bis 47n und 48a bis 48n jeweils einzeln durch entsprechende Anschlußleitungen angeschlossen sind. In diesen Anschlußleitungen sind Absperreinrichtungen, insbesondere Schaltventile angeordnet, so daß die Fluidkammern jeweils einzeln mit Blasluft, die durch die Durchgangsausnehmungen 11 der Förderbänder 7, 8 und 10 (Fig. 6) austritt, beaufschlagbar sind. Die Fluidkammern 46, 47, 48 wirken also bei Verbindung mit der Vakuumringleitung 50 als Saugkammern und bei Verbindung mit der nicht dargestellten Druckluftringleitung als Druckluftkammern.

Eine zweckmäßige Ausgestaltung bei der Verbindung der Fluidkammern 46, 47, 48 mit der Vakuumringleitung 50 und der entsprechenden Druckluftringleitung ist es, die in Fig. 6 gezeigten Ventile 51 als Dreiwegeventile auszubilden, die den zur entsprechenden Fluidkammer 46, 47, 48 führenden Abschnitt der Anschlußleitungen 49 in einer ersten Ventilstellung mit der Vakuumringleitung 50 verbinden, in einer zweiten Ventilstellung absperren und in einer dritten Ventilstellung mit der Druckluftringleitung verbinden.

Entsprechend der Unterteilung der Saugkästen 43, 44, 45 in einzelne Fluidkammern 46, 47 und 48 kann also im Bereich der Stauförderbänder 7 und 8 und des Anschließförderbandes 10 jeweils abschnittsweise wahlweise eine Saugwirkung oder eine Luftkissenwirkung erreicht werden. Durch entsprechende Umschaltung durch die Steuereinrichtung 60 kann also die Reibungswirkung zwischen transportierten Gegenständen und den einzelnen Förderbändern 7, 8 und 10 partiell verändert und gesteuert werden, so daß entsprechend unterschiedlicher Geschwindigkeiten der Förderbänder 7, 8 und 10 ein darauf transportierter Gegenstand 5 an eines oder zwei der Förderbänder ankoppelt und von diesem mitgenommen wird.

Nachfolgend wird die Funktion und Wirkungsweise der Fördervorrichtung insbesondere mit Bezug auf die Figuren 1 und 2 näher erläutert.

Zunächst wird ein Papierstapel 5 bei Stillstand des Zuförderers 1 auf diesen beispielsweise aus einer Schneidbearbeitungsvorrichtung aufgeschoben bzw. -gezogen. Durch Anfahren des Zuförderers 1 wird der aufgeschobene Blattstapel oder die Gruppe von Blattstapeln auf die Geschwindigkeit V₁ (Fig. 1) beschleunigt und mit dieser Geschwindigkeit auf den Anschließförderer 2 zugefördert und an diesen übergeben. Bevor der Blattstapel den Anschließförderer 2 erreicht, wird das Anschließförderband 10, das zunächst über die Kopplungseinrichtung 28 mit der Staufördergeschwindigkeit V₃ (Fig. 1) angetrieben wurde, auf die erhöhte Geschwindigkeit V₂ (Fig. 1) durch Zuschalten des Elektromotors 14 beschleunigt. Die Geschwindigkeit V₁ des Zuförderers 1 ist dabei derart gewählt, daß sie der erhöhten Geschwindigkeit V₂ des Anschließförderers 2 entspricht (Fig. 1). Der transportierte Blattstapel wird dementsprechend ruckfrei und ohne Beschleunigung oder Verzögerung auf den Anschließförderer 2 übergeben und wird mit der gleichen Geschwindigkeit, nämlich V₂ = V₁, weitergefördert.

Der Zuförderer 1 kann eine eigene Antriebseinrichtung besitzen, die unabhängig von den Antriebseinrichtungen 12 und 13 des Anschließförderers 2 und des Stauförderers 3 mit variabler Geschwindigkeit betreibbar sein kann.

Vorzugsweise kann der Zuförderer 1 durch die Antriebseinrichtung 12 des Anschließförderers 2 angetrieben werden. Hierbei kann eine Antriebswelle des Zuförderers 1 getrieblich mit dem Elektromotor 14, insbesondere durch einen nicht dargestellten Zahnriementrieb und vorzugsweise unter Zwischenschaltung einer überlaufbaren Freilaufeinrichtung (ebenfalls nicht dargestelle) verbunden sein. Dies besitzt den Vorteil, daß bei der Übergabe eines Gegenstandes von dem Zuförderer 1 auf den Anschließförderer 2 diese beiden Förderer exakt synchron laufen. Bei einem Anlaufen des Elektromotors 14 wird zunächst nur der Zuförderer 1 angefahren, während der Anschließförderer 2 mit der konstanten Geschwindigkeit V₃ betrieben wird. Wird von dem Elektromotor 14 eine der Fördergeschwindigkeit V₃ entsprechende Geschwindigkeit erreicht bzw. überschritten, wird der Anschließförderer 2 mitgenommen und zusammen mit dem Zuförderer 1 auf eine erhöhte Geschwindigkeit V₂ > V₃ beschleunigt (Fig. 1).

Die sich bis zu dem stromaufseitigen Ende des Anschließförderers, d.h. bis zu dem Übergabebereich zwischen dem Zuförderer 1 und dem Anschließförderer 2, erstreckenden Stauförderbänder 7 und 8, die mit der konstanten Staufördergeschwindigkeit V₃ laufen, werden von dem mit der erhöhten Geschwindigkeit V₂ geförderten Blattstapel 5 überholt. Der Blattstapel 5 gleitet über die Förderbänder 7 und 8 hinweg.

Um den im Überlappungsbereich transportierten Blattstapel 5 durch das Anschließförderband 10 mit der erhöhten Geschwindigkeit V₂ zu fördern und zu verhindern, daß der Blattstapel 5 durch die langsamer, mit der Geschwindigkeit V₃ laufenden Stauförderbänder 7 und 8 abgebremst wird, wird der Blattstapel 5 im Bereich des Anschließförderbandes 10 mit Saugluft beaufschlagt und im Bereich der beiden Stauförderbänder 7 und 8 mit Blasluft beaufschlagt, so daß der Blattstapel an das Anschließförderband 10 angesaugt wird und relativ zu den Stauförderbändern 7 und 8 auf einem Luftkissen gleitet.

Hierzu werden von der Steuereinrichtung 60 die Ventile 51 derart angesteuert, daß die jeweils unter dem Blattstapel 5 befindlichen, dem Anschließförderband zugeordneten Fluidkammern 48a bis 48n mit der Vakuumringleitung 50 verbunden sind und die jeweils unter dem Blattstapel 5 befindlichen, den Stauförderbändern 7 und 8 zugeordneten Fluidkammern 46a bis 46n, 47a bis 47n mit der Druckluftringleitung verbunden sind.

Die Saugluft- und die Blasluftbeaufschlagung wird mit der Transportbewegung des Blattstapels 5 weitergeschaltet und ist jeweils nur auf den von dem Blattstapel 5 überstrichenen Bereich begrenzt. Durch den Drehgeber 40 wird die jeweilige Position des sich mit dem Förderband 10 mitbewegenden Blattstapels 5 erfaßt, die der jeweiligen Stellung des Förderbandes 10 entspricht. Entsprechend der Signale des Drehgebers 40 werden die gerade unter dem Blattstapel 5 entsprechend dessen jeweiliger Position befindlichen Fluidkammern mit Saugluft bzw. Blasluft aktiviert, während noch nicht erreichte und bereits überfahrene Fluidkammern 46, 47, 48 von der Steuereinrichtung abgeschaltet werden. In der in Fig. 1 und 3 gezeigten Position des Blattstapels 5 bzw. der Gruppe von Blattstapeln 5 sind also die Kammern 48a und 48b mit Saugluft beaufschlagt und durch die Kammern 46a, 46b, 47a und 47b wird Blasluft auf den Blattstapel 5 geblasen. Da die Vorderkante des Blattstapels 5 (die in Fig. 3 rechte Kante des Blattstapels 5) gerade die Kammern 46c, 47c und 48c erreicht, werden diese zuvor abgesperrten Kammern aktiviert und mit Saug- bzw. Blasluft beaufschlagt.

Der vorausgeförderte Blattstapel 105 (Fig. 1) ist bereits an die vor dem Vereinzelungsförderer 4 aufgestauten Blattstapel angeschlossen und wird mit der Staufördergeschwindigkeit V₃ gefördert. Der bereits aufgestaute Blattstapel 105 befindet sich noch im Überlappungsbereich zwischen den Anschließ- und Stauförderern 2 bzw. 3, so daß das Anschließförderband, das die Geschwindigkeit V₂ hat, bezogen auf den Blattstapel 105 zu schnell und unter diesem durchläuft, während der Blattstapel 105 von den Stauförderbändern 7 und 8 gefördert wird. Im Bereich des Blattstapels 105 sind die unter diesem befindlichen, den Stauförderbändern 7 und 8 zugeordneten Fluidkammern 46, 47 mit der Vakuumringleitung 50 verbunden, um den Blattstapel 105 bzw. die Gruppe von Blattstapeln 105 an die Stauförderbänder 7 und 8 anzusaugen. Um Beschädigungen des Blattstapels 105 im Bereich des durchlaufenden Anschließförderbandes 10 zu vermeiden und eine ungewollte Beschleunigung des Blattstapels 105 über die Staufördergeschwindigkeit V₃ hinaus zu verhindern, können die unter dem Blattstapel 105 entsprechend dessen jeweiliger Position befindlichen, dem Anschließförderband 10 zugeordneten Fluidkammern 48 mit der Druckluftringleitung verbunden werden, um zwischen dem Anschließförderband 10 und dem Blattstapel 105 ein Luftkissen zu erzeugen.

Dementsprechend bewegen sich die aneinander anzuschließenden Blattstapel 5 und 105 mit unterschiedlichen Geschwindigkeiten, nämlich V₂ und V₃ (Fig. 1). Der Abstand der beiden Gegenstände 105 und 5 voneinander verringert sich dementsprechend kontinuierlich. Die jeweilige Position der Gegenstände 105 und 5 werden durch die Drehgeber 41 und 40 ständig erfaßt und die entsprechenden Signale durch die Steuereinrichtung verarbeitet um zum einen die Saugluftvorrichtung und die Blasluftvorrichtung anzusteuern und zum anderen die Fördergeschwindigkeiten V₃ und V₂ der Stauförderbänder 7 und 8 und des Anschließförderbandes 10 zu steuern.

Um den Blattstapel 5 sanft und ohne Stoß an den Blattstapel 105 anzuschließen, wird die Geschwindigkeit des Anschließförderers 2 vor Erreichen des Staupunktes S kontinuierlich auf die Geschwindigkeit V₃ des Stauförderers 3 verringert (Fig. 2) derart, daß der Anschließförderer 2 und der anzuschließende Blattstapel 5 exakt im Staupunkt S, d.h. wenn eine Vorderkante des Blattstapels 5 eine Hinterkante des Blattstapels 105 erreicht, bis auf die Geschwindigkeit V₃ verzögert ist und diese erreicht. Nach Erreichen des Staupunktes S wird die Antriebseinrichtung 12 des Anschließförderers 2 abgeschaltet und das Anschließförderband 10 durch die Kopplungseinrichtung 28 synchron mit der Geschwindigkeit V₃ des Stauförderers angetrieben.

Bei Erreichen des Staupunktes oder ggf. kurz nachher wird die Saugluft- und Blasluftbeaufschlagung umgeschaltet bzw. abgeschaltet. Solange sowohl der Anschließförderer als auch der Stauförderer mit der Geschwindigkeit V₃ betrieben werden, kann die Blasluft- und Saugluftbeaufschlagung ganz abgeschaltet sein, da dann die Stauförderbänder 7 und 8 und das Anschließförderband 10 im Überlappungsbereich keinen Geschwindigkeitsunterschied haben.

Wird der Anschließförderer 2 wieder auf eine höhere Geschwindigkeit V₂ beschleunigt, um erneut einen Blattstapel von dem Zuförderer 1 zu übernehmen und diesen an den Blattstapel 5 anzuschließen, werden die noch im Überlappungsbereich geförderten Blattstapel 5 und 105 im Bereich der Stauförderbänder 7 und 8 mit Saugluft beaufschlagt und im Bereich des Anschließförderbandes 10 mit Blasluft beaufschlagt.

Die aufgestauten Blattstapel werden mit der konstanten Geschwindigkeit V₃ auf den Vereinzelungsförderer 4 zugefördert und an diesem entsprechend dessen höheren Geschwindigkeit V₄ auf diese beschleunigt und von dem jeweils nachfolgenden, noch nicht von dem Vereinzelungsförderer 4 erfaßten Blattstapel auseinandergezogen.

Die erfindungsgemäße Fördervorrichtung zeichnet sich durch ihren einfachen Aufbau und das präzise und stoßfreie Anschließen zunächst voneinander beabstandeter Blattstapel aus. Durch die Koordination und Steuerung der Fördergeschwindigkeiten der Förderer ist ein Blattstapel jederzeit an zumindest einen Förderer ohne zu rutschen angekoppelt. Die Saugluft- und Blasluftbeaufschlagung bewirkt eine exakte und Beschädigungen der Blattstapel vermeidende Förderung derselben. Die partielle und mit den Gegenständen mitwandernde Saugluft- und Blasluftbeaufschlagung verringert darüber hinaus die notwendigen Luftströme.

## Patentansprüche

1. Verfahren zur Förderung von Gegenständen, insbesondere Blattstapeln, wobei die Gegenstände auf einem Anschließförderer und einem mit dem Anschließförderer überlappenden Stauförderer in eine gemeinsame Richtung gefördert und nachfolgende Gegenstände an vorher geförderte Gegenstände entsprechend unterschiedlicher Geschwindigkeiten des Anschließförderers und des Stauförderers angeschlossen werden, wobei die Gegenstände (5, 105) zumindest im Überlappungsbereich des Anschließförderers (2) und des Stauförderers (3) mittels Saugluft an den Stauförderer angesaugt werden, **dadurch gekennzeichnet, daß** die Gegenstände (5, 105) bis zum Erreichen des Staupunktes (S) an den Anschließförderer (2) und nach Erreichen des Staupunktes (s) an den Stauförderer (3) angesaugt werden und daß die Gegenstände (5, 105) von dem Anschließförderer (2) an den Stauförderer (3) durch Umschalten der Ansaugung von dem Anschließförderer (2) auf den Stauförderer (3) übergeben werden.

2. Verfahren nach Anspruch 1, **dadurch gekennzeichnet, daß** jeweils nur in einem Abschnitt des Anschließförderers (2) und/oder des Stauförderers (3), insbesondere in dem Abschnitt, in dem ein entsprechender Gegenstand (5, 105) auf dem Anschließförderer und/oder dem Stauförderer liegt, Saugwirkung aufgebracht wird, wobei entsprechend der jeweiligen Fördergeschwindigkeit (V₂, V₃) an nacheinander folgenden Abschnitten angesaugt wird.

3. Verfahren nach Anspruch 1 oder 2, **dadurch gekennzeichnet, daß** ein voranlaufender Gegenstand (105) durch den Stauförderer (3) mit einer konstanten ersten Geschwindigkeit (V₃) gefördert wird und ein anzuschließender Gegenstand (5) in einem ersten Schritt durch den Anschließförderer mit einer zweiten Geschwindigkeit (V₂), die größer ist als die erste Geschwindigkeit (V₃), gefördert wird und in einem zweiten Schritt durch den Anschließförderer kontinuierlich auf die erste Geschwindigkeit (V₃) verzögert wird.

4. Verfahren nach zumindest einem der vorhergehenden Ansprüche, **dadurch gekennzeichnet, daß** Gegenstände (5, 105) im Bereich des Stauförderers (3) und/oder des Anschließförderers (2), von dem die Gegenstände abzukoppeln sind, mit Blasluft beaufschlagt werden, wobei vorzugsweise jeweils nur im Bereich der abzukoppelnden Gegenstände entsprechend deren jeweiliger Position an nacheinander folgenden Abschnitten des Stauförderers und/oder des Schnellförderers Blasluft eingeblasen wird.

5. Verfahren nach zumindest einem der vorhergehenden Ansprüche, **dadurch gekennzeichnet, daß** die Beaufschlagung der Gegenstände (5, 105) mit Saugluft und/oder eine Beaufschlagung der Gegenstände mit Blasluft im wesentlichen mit einer Vorderkante des jeweiligen Gegenstandes mitwandert.

6. Verfahren zur Förderung von Gegenständen, insbesondere Blattstapeln, wobei die Gegenstände auf einem Anschließförderer und einem mit dem Anschließförderer überlappenden Stauförderer in eine gemeinsame Richtung gefördert und nachfolgende Gegenstände an vorher geförderte Gegenstände entsprechend unterschiedlicher Geschwindigkeiten des Anschließförderers und des Stauförderers angeschlossen werden, wobei die Gegenstände (5, 105) zumindest im überlappungsbereich des Anschließförderers (2) und des Stauförderers (3) mittels Saugluft an den Anschließförderer und/oder den Stauförderer angesaugt werden **dadurch gekennzeichnet, daß** die Gegenstände (5, 105) im Überlappungsbereich im Bereich des Stauförderers (3) und gegebenenfalls des Anschließförderers (2) zum Abkoppeln der Gegenstände von einem der Förderer (2, 3) mit Blasluft beaufschlagt werden und die Blasluftbeaufschlagung an einem Staupunkt auf dem Stauförderen (3) aus- und gegebenenfalls auf den Anschließförderer (2) umgeschaltet wird.

7. Fördervorrichtung zur Förderung von Gegenständen, insbesondere Blattstapeln, mit einem Anschließförderer und einem Stauförderer, die eine gemeinsame Förderrichtung haben, einander überlappen und mit relativ zueinander verschiedenen Geschwindigkeiten betreibbar sind, insbesondere zur Durchführung des Verfahrens nach einem der Ansprüche 1 bis 5, wobei eine Saugvorrichtung (42) zur Ansaugung der Gegenstände (5, 105) an den Stauförderer (3) im Überlappungsbereich derselben vorgesehen ist, **dadurch gekennzeichnet, daß** die Saugvorrichtung auch zur Ansaugung der Gegenstände (5, 105) an den Anschließförderer (2) vorgesehen ist, und daß eine Schalteinheit sur Umschaltung der Ansaugung von dem Anschließförderer (2) auf den Stauförderer (3) vorgesehen ist.

8. Fördervorrichtung nach Anspruch 7, **dadurch gekennzeichnet, daß** die Saugvorrichtung (42) einen Ansaugbereich (43, 44, 45) aufweist, der auf einen Abschnitt des Anschließförderers (2) und/oder des Stauförderers (3) begrenzbar ist, insbesondere auf einen Abschnitt, in dem sich der anzusaugende Gegenstand (5, 105) befindet, begrenzbar ist, wobei vorzugsweise der Ansaugbereich entsprechend der jeweiligen Position des anzusaugenden Gegenstandes auf verschiedene Abschnitte (46a bis 46n, 47a bis 47n, 48a bis 48n) des Anschließförderers (2) und/oder des Stauförderers (3) einstellbar ist.

9. Fördervorrichtung nach Anspruch 7 oder 8, **dadurch gekennzeichnet, daß** die Saugvorrichtung (42) einen dem Anschließförderer (2) zugeordneten Ansaugbereich (48) und einen dem Stauförderer (3) zugeordneten Ansaugbereich (46, 47) aufweist.

10. Fördervorrichtung nach zumindest einem der Ansprüche 7 bis 9, **dadurch gekennzeichnet, daß** eine Steuereinrichtung (60) zur Steuerung der Saugluftvorrichtung (42) vorgesehen ist, derart, daß in einem Bereich eines Gegenstandes (5, 105) nur der Anschließförderer (2) oder der Stauförderer (3) vorzugsweise jeweils nur im Bereich des Gegenstandes entsprechend dessen jeweiliger Position, mit Saugluft beaufschlagt ist.

11. Fördervorrichtung nach zumindest einem der Ansprüche 7 bis 10, **dadurch gekennzeichnet, daß** eine Blasluftvorrichtung zur Beaufschlagung der Gegenstände (5, 105) mit Blasluft vorgesehen ist, wobei vorzugsweise die Blasluftvorrichtung einen Austritt (43, 44, 45) aufweist, der auf einen Abschnitt des Anschließförderers (2) und/oder des Stauförderers (3) begrenzbar ist, insbesondere auf mehrere Abschnitte (46a bis 46n, 47a bis 47n, 48a bis 48n) entlang der Förderrichtung einstellbar ist, wobei vorzugsweise die Blasluftvorrichtung einen dem Anschließförderer (2) zugeordneten Austritt (48) und einen dem Stauförderer (3) zugeordneten Austritt (46, 47) aufweist und eine Steuereinrichtung (60) zur Steuerung der Blasluftvorrichtung vorgesehen ist, derart, daß in einem Bereich eines Gegenstandes (5, 105) nur der Anschließförderer (2) oder der Stauförderer (3), vorzugsweise nur im Bereich des Gegenstandes entsprechend dessen jeweiliger Position, mit Blasluft beaufschlagt ist.

12. Fördervorrichtung nach Anspruch 10 oder 11, **dadurch gekennzeichnet, daß** die Steuereinrichtung (60) mit einer Erfassungsvorrichtung zur Erfassung der Position der Gegenstände (5, 105) verbunden ist, wobei vorzugsweise die Erfassungsvorrichtung jeweils Antriebseinrichtungen (12, 13) des Anschließförderers (2) und/oder des Stauförderers (3) zugeordnete Drehgeber (40, 41) zur mittelbaren Bestimmung der Position der Gegenstände aufweist.

13. Fördervorrichtung nach zumindest einem der Ansprüche 7 bis 12, **dadurch gekennzeichnet, daß** dem Anschließförderer (2) und/oder dem Stauförderer (3) eine Reihe von Fluidkammern (46a bis 46n, 47a bis 47n, 48a bis 48n) zugeordnet sind, die jeweils wahlweise mit einer Saugeinheit und einer Blasluftquelle verbindbar sind, wobei vorzugsweise die Fluidkammern entlang der Förderrichtung des Anschließförderers und/oder des Stauförderers angeordnet sind und insbesondere unmittelbar aneinandergrenzen.

14. Fördervorrichtung zur Förderung von Gegenständen, insbesondere Blattstapeln, mit einem Anschließförderer und einem Stauförderer, die eine gemeinsame Förderrichtung haben, einander überlappen und mit relativ zueinander verschiedenen Geschwindigkeiten betreibbar sind, insbesondere zur Durchführung des Verfahrens nach Anspruch 6, **gekennzeichnet durch** eine Blasluftvorrichtung zur Beaufschlagung der Gegenstände (5, 105) mit Blasluft, wobei die Blasluftvorrichtung einen Austritt (43, 44, 45) im Überlappungsbereich aufweist, der auf einen Abschnitt des Stauförderers (3) und gegebenenfalls des Anschließförderers (2) begrenzbar ist und eine Steuereinrichtung (60) zur Steuerung der Blasluftvorrichtung vorgesehen ist, derart, daß in einem Bereich eines Gegenstandes (5, 105) vor einem Staupunkt nur der stauförderer (3) und nach dem Staupunkt kein Förderer oder gegebenenfalls nur der Anschließförderer (2) mit Blasluft beaufschlagt ist.

15. Fördervorrichtung nach zumindest einem der Ansprüche 7 bis 14, **dadurch gekennzeichnet, daß** eine Förderebene des Anschließförderers (2) und eine Förderebene des Stauförderers (3) in einer gemeinsamen Ebene (6) liegen.

16. Fördervorrichtung nach zumindest einem der Ansprüche 7 bis 15, **dadurch gekennzeichnet, daß** der Anschließförderer (2) und der Stauförderer (3) Bandförderer sind.

17. Fördervorrichtung nach zumindest einem der Ansprüche 7 bis 16, **dadurch gekennzeichnet, daß** der Anschließförderer (2) und der Stauförderer (3) jeweils eine Antriebseinrichtung (12, 13) aufweisen, wobei die Antriebseinrichtung (12) des Anschließförderers mit einer höheren Ausgangsgeschwindigkeit (V₂) als die Antriebseinrichtung des Stauförderers (3) betreibbar ist, wobei vorzugsweise eine Kopplungseinrichtung (28), insbesondere eine Freilaufkupplung (36), zur von dem Anschließförderer überlaufbaren Kopplung des Anschließförderers an die Antriebseinrichtung (13) des Stauförderers (3) vorgesehen ist.

18. Fördervorrichtung nach zumindest einem der Ansprüche 7 bis 17, **dadurch gekennzeichnet, daß** ein diskontinuierlich betreibbarer Zuförderer (1) vorgesehen ist, der stromauf des Anschließförderers (2) angeordnet ist, wobei vorzugsweise der Zuförderer mit dem Anschließförderer eine gemeinsame Förderrichtung besitzt und mit variabler Geschwindigkeit (V₁), insbesondere in einem Bereich gleich oder kleiner der Geschwindigkeit (V₂) des Anschließförderers, betreibbar ist, und eine Steuereinrichtung (60) zur Steuerung der Geschwindigkeiten (V₁, V₂) des Zuförderers (1) und des Anschließförderers (2) vorgesehen ist, derart, daß zur Aufgabe eines Gegenstandes auf den Zuförderer dieser steht und zur Übergabe eines Gegenstandes von dem Zuförderer auf den Anschließförderer diese beiden dieselbe Fördergeschwindigkeit (V₂), insbesondere eine höhere Fördergeschwindigkeit als der Stauförderer (3), haben.

19. Fördervorrichtung nach zumindest einem der Ansprüche 7 bis 18, **dadurch gekennzeichnet, daß** eine Förderoberfläche des Anschließförderers (2) und des Stauförderers (3) glatt ist.

## Claims

1. Method for conveying articles, particularly sheet stacks, the articles being conveyed on a connecting conveyor and an accumulating conveyor overlapping with the connecting conveyor in a common direction and following articles are connected to previously conveyed articles corresponding to the different speeds of the connecting conveyor and the accumulating conveyor, wherein, at least in the overlap area of the connecting conveyor (2) and the accumulating conveyor (3), the articles (5, 105) are sucked by means of suction air onto the accumulating conveyor, **characterized in that** the articles (5, 105) are sucked onto the connecting conveyor (2) until the accumulation point (S) is reached and onto the accumulating conveyor (3) after reaching the accumulation point (S) and that the articles (5, 105) are transferred from the connecting conveyor (2) to the accumulating conveyor (3) by switching suction from the connecting conveyor (2) to the accumulating conveyor (3).

2. Method according to claim 1, **characterized in that** a suction action is only applied in a portion of the connecting conveyor (2) and/or the accumulating conveyor (3) , particularly in the portion where a corresponding article (5, 105) is located on the connecting conveyor and/or accumulating conveyor and in accordance with the conveying speed (V₂, V₃) suction occurs on successive, following portions.

3. Method according to claim 1 or 2, **characterized in that** a preceding article (105) is conveyed by the accumulating conveyor (3) at a constant first speed (V₃) and an article (5) to be connected is conveyed in a first step by the connecting conveyor at a second speed (V₂) higher than the first speed (V₃) and in a second step is continuously decelerated to the first speed (V₃) by the connecting conveyor.

4. Method according to at least one of the preceding claims, **characterized in that** an air blast is applied to articles (5, 105) in the area of the accumulating conveyor (3) and/or the connecting conveyor (2) from which the articles are to be decoupled and preferably an air blast is only blown in in the area of the articles to be decoupled corresponding to their position on successively following portions of the accumulating conveyor and/or high speed conveyor.

5. Method according to at leastone of the preceding claims, **characterized in that** the suction air and/or air blast action on the articles (5, 105) substantially migrates with a leading edge of the particular article.

6. Method for conveying articles, particularly sheet stacks, the articles being conveyed on a connecting conveyor and an accumulating conveyor overlapping with the connecting conveyor in a common direction and following articles are connected to previously conveyed articles corresponding to the different speeds of the connecting conveyor and the accumulating conveyor where, at least in the overlap area of the connecting conveyor (2) and accumulating conveyor (3), the articles (5, 105) are sucked by suction air onto the connecting conveyor and/or accumulating conveyor, **characterized in that** an air blast is applied to the articles (5, 105) in the overlap area in the vicinity of the accumulating conveyor (3) and optionally connecting conveyor (2) for decoupling articles from one of the conveyors (2, 3) and the air blast action at an accumulation point is switched to the accumulating conveyor (3) and optionally to the connecting conveyor (2).

7. Conveying apparatus for conveying articles, particularly sheet stacks, with a connecting conveyor and an accumulating conveyor, which have a common conveying direction, overlap one another and can be operated at different speeds, particularly for performing the method according to one of the claims 1 to 5, wherein a suction device (42) is provided for the suction of the articles (5, 105) onto the accumulating conveyor (3) in the overlap area thereof, **characterized in that** the suction device is also provided for the suction of articles (5, 105) onto the connecting conveyor (2) and that there is a switching unit for switching suction from the connecting conveyor (2) to the accumulating conveyor (3).

8. Conveying apparatus according to claim 7, **characterized in that** the suction device (42) has a suction area (43, 44, 45), which can be limited to a portion of the connecting conveyor (2) and/or the accumulating conveyor (3), particularly to a portion in which is located the article (5, 105) to be sucked, preferably the suction area being adjustable in accordance with the position of the article to be sucked to different portions (46a to 46n, 47a to 47n, 48a to 48n) of the connecting conveyor (2) and/or accumulating conveyor (3).

9. Conveying apparatus according to claim 7 or 8, **characterized in that** the suction device (42) has a suction area (48) associated with the connecting conveyor (2) and a suction area (46, 47) associated with the accumulating conveyor (3).

10. Conveying apparatus according to at least one of the claims 7 to 9, **characterized in that** a control device (60) for controlling the suction air device (42) is provided, so that in an area of an article (5, 105), only the connecting conveyor (2) or the accumulating conveyor (3) is supplied with suction air, preferably in the area of the article corresponding to its position.

11. Conveying apparatus according to at least one of the claims 7 to 10, **characterized in that** an air blast device is provided for supplying air blast to the articles (5, 105), the air blast device preferably having an outlet (43, 44, 45) which can be limited to a portion of the connecting conveyor (2) and/or accumulating conveyor (3), particularly several portions (46a to 46n, 47a to 47n, 48a to 48n) along the conveying direction, in which the air blast device preferably has an outlet (48) associated with the connecting conveyor (2) and an outlet (46, 47) associated with the accumulating conveyor (3) and a control device (60) is provided for controlling the air blast device in such a way that in an area of an article (5, 105) only the connecting conveyor (2) or the accumulating conveyor (3) is supplied with an air blast, preferably only in the area of the article corresponding to its position.

12. Conveying apparatus according to claim 10 or 11, **characterized in that** the control device (60) is connected to a determination device for determining the position of the articles (5, 105) and preferably the determination device has rotation pick-ups (40, 41) for the indirect determination of the position of the articles associated with the driving mechanisms (12, 13) of the connecting conveyor (2) and/or the accumulating conveyor (3).

13. Conveying apparatus according to at least one of the claims 7 to 12, **characterized in that** with the connecting conveyor (2) and/or the accumulating conveyor (3) are associated numerous fluid chambers (46a to 46n, 47a to 47n, 48a to 48n), which can in each case be connected, as desired, to a suction air unit and an air blast source and preferably the fluid chambers are positioned, particularly immediately adjacent to one another, along the conveying direction of the connecting conveyor and/or the accumulating conveyor.

14. Conveying apparatus for conveying articles, particularly sheet stacks, with a connecting conveyor and an accumulating conveyor, which have a common conveying direction, which overlap with one another and are operable with mutually relatively differing speeds, particularly for performing the method according to claim 6, **characterized by** an air blast device for supplying an air blast to the articles (5, 105), the air blast device having an outlet (43, 44, 45) in the overlap area, which can be limited to a portion of the accumulating conveyor (3) and optionally the connecting conveyor (2) and a control device (60) is provided for controlling the air blast device, in such a way that in an area of an article (5, 105) before an accumulation point the accumulating conveyor (3) can be supplied with an air blast and after the accumulation point no conveyor or optionally only the connecting conveyor (2) is supplied with an air blast.

15. Conveying apparatus according to at least one of the claims 7 to 14, **characterized in that** a conveying plane of the connecting conveyor (2) and a conveying plane of the accumulating conveyer (3) are located in a common plane.

16. Conveying apparatus according to at least one of the claims 7 to 15, **characterized in that** the connecting conveyor (2) and accumulating conveyor (3) are belt conveyors.

17. Conveying apparatus according to at least one of the claims 7 to 16, **characterized in that** the connecting conveyor (2) and accumulating conveyor (3) in each case have a driving mechanism (12, 13), the driving mechanism (12) of the connecting conveyor being operable with a higher initial speed (V₂) than the driving mechanism of the accumulating conveyor (3) and preferably a coupling device (28), particularly a freewheel clutch (36) is provided for the connecting conveyor-overtravellable coupling to the driving mechanism (13) of the accumulating conveyor (3).

18. Conveying apparatus according to at least one of the claims 7 to 17, **characterized in that** there is a discontinuously operable feed conveyor (1), which is positioned upstream of the connecting conveyor (2) and preferably the feed conveyor has a common conveying direction with the connecting conveyor and is operable at a variable speed (V₁), particularly in a range identical to or lower than the connecting conveyor speed (V₂) and a control device (60) is provided for controlling the speeds (V₁, V₂) of the feed conveyor (1) and the connecting conveyor (2), so that for delivering an article to the feed conveyor the latter is stationary and for transferring an article from the feed conveyor to the connecting conveyor both have the same conveying speed (V₂), particularly a higher conveying speed than the accumulating conveyor (3).

19. Conveying apparatus according to at least one of the claims 7 to 18, **characterized in that** a conveyor surface of the connecting conveyor (2) and the accumulating conveyor (3) is smooth.

## Revendications

1. Procédé pour le transport d'objets, notamment de piles de feuilles, les objets étant transportés dans une direction commune sur un transporteur de contiguïté et un transporteur d'accumulation chevauchant le transporteur de contiguïté et des objets suivants étant mis en contiguïté d'objets transportés au préalable de manière correspondante aux différentes vitesses du transporteur de contiguïté et du transporteur d'accumulation, les objets (5, 105) étant aspirés au moyen d'air en dépression auprès du transporteur d'accumulation au moins dans le domaine de recouvrement du transporteur de contiguïté (2) et du transporteur d'accumulation (3), **caractérisé en ce que** jusqu'à l'atteinte d'un point d'arrêt (S) les objets (5, 105) sont aspirés auprès du transporteur de contiguïté (2), et qu'à la suite de l'atteinte du point d'arrêt (S) il sont aspirés auprès du transporteur d'accumulation (3), et **en ce que** les objets (5, 105) sont transmis du transporteur à contiguïté (2) au transporteur d'accumulation (3) par un passage de l'effet d'aspiration du transporteur à contiguïté (2) au transporteur d'accumulation (3).

2. Procédé d'après la revendication 1, **caractérisé en ce qu'**un effet d'aspiration est respectivement produit seulement dans un domaine du transporteur de contiguïté (2) et/ou du transporteur d'accumulation (3), notamment dans le domaine dans lequel un objet (5, 105) correspondant se trouve sur le transporteur de contiguïté et/ou sur le transporteur d'accumulation, l'effet d'aspiration étant produit conformément à la vitesse de transport (V₂, V₃) respective dans des domaines consécutifs entr'eux.

3. Procédé d'après la revendication 1 ou 2, **caractérisé en ce qu'**un objet (105) en avance sur d'autres est transporté à travers le transporteur d'accumulation (3) avec une première vitesse (V₃) constante et qu'un objet (5) qui doit être mis en contiguïté est transporté dans une première phase à travers le transporteur de contiguïté avec une deuxième vitesse (V₂) plus grande par rapport à la première vitesse (V₃), et que dans une deuxième phase il est retardé le long du transporteur de contiguïté de manière continue jusqu'à la première vitesse (V₃).

4. Procédé d'après au moins une des revendications précédentes, **caractérisé en ce que** des objets (5, 105) se trouvent sous l'effet d'air éjecté dans le domaine du transporteur d'accumulation (3) et/ou du transporteur de contiguïté (2), duquel les objets doivent être désaccouplés, de l'air éjecté étant de préférence respectivement soufflé seulement dans le domaine des objets à désaccoupler conformément à leur respective position dans des secteurs consécutifs du transporteur d'accumulation et/ou du transporteur rapide.

5. Procédé d'après au moins une des revendications précédentes, **caractérisé en ce que** la mise des objets (5, 105) sous l'effet de l'air aspiré et/ou une mise des objets sous l'effet de l'air soufflé se déplace essentiellement ensemble avec un bord antérieur de l'objet respectif.

6. Procédé pour le transport d'objets, notamment de piles de feuilles, les objets étant transportés dans une direction commune sur un transporteur de contiguïté et un transporteur d'accumulation chevauchant le transporteur de contiguïté et des objets suivants étant joints auprès d'objets transportés au préalable de manière correspondante aux différentes vitesses du transporteur de contiguïté et du transporteur d'accumulation, les objets (5, 105) étant aspirés au moyen d'air en dépression auprès du transporteur de contiguïté et/ou du transporteur d'accumulation au moins dans le domaine de recouvrement du transporteur de contiguïté (2) et du transporteur d'accumulation (3), **caractérisé en ce que** les objets (5, 105) dans le domaine de recouvrement sont mis sous l'effet de l'air éjecté dans le domaine du transporteur d'accumulation (3) et éventuellement du transporteur de contiguïté (2) pour le désaccouplement des objets d'un des transporteurs (2, 3) et que la mise sous l'effet de l'air éjecté est interrompue dans un point d'arrêt sur le transporteur d'accumulation (3) et éventuellement commutée pour un passage au transporteur de contiguïté (2).

7. Dispositif de transport pour le transport d'objets, notamment de piles de feuilles, avec un transporteur de contiguïté et un transporteur d'accumulation, qui ont la même direction de transport, qui se recouvrent et qui sont à actionner à des vitesses relativement différentes entr'elles, notamment pour l'exécution du procédé d'après une des revendications de 1 à 5, un moyen d'aspiration (42) étant prévu pour l'aspiration des objets (5, 105) auprès du transporteur d'accumulation (3) dans le domaine de recouvrement de celui-ci, **caractérisé en ce que** le moyen d'aspiration est prévu également pour l'aspiration des objets (5, 105) auprès du transporteur de contiguïté (2), et **en ce que** un'unité de commutation est prévue pour la commutation du moyen d'aspiration entre le transporteur de contiguïté (2) et le transporteur d'accumulation (3).

8. Dispositif de transport d'après la revendication 7, **caractérisé en ce que** le moyen d'aspiration (42) présente un domaine d'aspiration (43, 44, 45), pouvant être limité à un secteur du transporteur de contiguïté (2) et/ou du transporteur d'accumulation (3), notamment à un secteur dans lequel se trouve l'objet (5, 105) qui doit être aspiré, le domaine d'aspiration pouvant être de préférence ajusté par rapport à la position respective de l'objet qui doit être aspiré à différents secteurs (de 46a à 46n, de 47a à 47n, de 48a à 48n) du transporteurs de contiguïté (2) et/ou du transporteur d'accumulation (3).

9. Dispositif de transport d'après la revendication 7 ou 8, **caractérisé en ce que** le moyen d'aspiration (42) présente un domaine d'aspiration (48) associé au transporteur de contiguïté (2) et un domaine d'aspiration (46, 47) associé au transporteur d'accumulation (3).

10. Dispositif de transport d'après au moins une des revendications de 7 à 9, **caractérisé en ce qu'**un moyen de commande (60) est prévu pour la commande du moyen d'aspiration d'air (42), de telle manière que dans un domaine d'un objet (5, 105) seulement le transporteur de contiguïté (2) ou le transporteur d'accumulation (3) est alimenté par de l'air aspirée de préférence respectivement seulement dans le domaine de l'objet selon sa position relative.

11. Dispositif de transport d'après au moins une des revendications de 7 à 10, **caractérisé en ce qu'**un moyen de projection d'air est prévu pour la mise sous l'effet de l'air éjecté des objets (5, 105), le moyen de projection d'air présentant de préférence une sortie (43, 44, 45), pouvant être limitée à un secteur du transporteur de contiguïté (2) et/ou du transporteur d'accumulation (3), pouvant être ajusté notamment à plusieurs secteurs (de 46a à 46n, de 47a à 47n, de 48a à 48n) le long de la direction de transport, le moyen de projection d'air présentant de préférence une sortie (48) associée au transporteur de contiguïté (2) et une sortie (46, 47) associée au transporteur d'accumulation (3), un moyen de commande (60) étant prévu pour la commande du moyen de projection d'air, de telle manière que dans un domaine d'un objet (5, 105) uniquement le transporteur de contiguïté (2) ou le transporteur d'accumulation (3) est alimenté par de l'air projetée, de préférence seulement dans le domaine de l'objet selon sa position respective.

12. Dispositif de transport d'après la revendication 10 ou 11, **caractérisé en ce que** le moyen de commande (60) et raccordé avec un moyen de captage pour le captage de la position des objets (5, 105), le moyen de captage présentant pour l'évaluation indirecte de la position des objets de préférence respectivement des encodeurs (40, 41) associés aux moyens d'actionnement (12, 13) du transporteur de contiguïté (2) et/ou du transporteur d'accumulation (3).

13. Dispositif de transport d'après au moins une des revendications de 7 à 12, **caractérisé en ce qu'**une série de chambres fluidiques (de 46a à 46n, de 47a à 47n, de 48a à 48n) sont associées au transporteur de contiguïté (2) et/ou au transporteur d'accumulation (3), lesquelles peuvent respectivement être raccordées au choix avec un'unité d'aspiration et avec une source d'air de projection, les chambres fluidiques étant de préférence disposées le long de la direction de transport du transporteur de contiguïté et/ou du transporteur d'accumulation et étant notamment directement limitrophes entr'elles.

14. Dispositif de transport pour le transport d'objets, notamment de piles de feuilles, avec un transporteur de contiguïté et un transporteur d'accumulation, qui ont une même direction de transport, qui se chevauchent et qui peuvent être actionnés à des vitesses différentes l'une par rapport à l'autre, notamment pour l'exécution du procédé d'après la revendication 6, **caractérisé par** un moyen de projection d'air pour la mise sous l'effet de l'air projetée des objets (5, 105), le moyen de projection d'air présentant une sortie (43, 44, 45) dans le domaine de recouvrement pouvant être limitée à un secteur du transporteur d'accumulation (3) et éventuellement du transporteur de contiguïté (2), et par un moyen de commande (60) étant prévu pour la commande du moyen de projection d'air, de telle manière que dans un domaine d'un objet (5, 105), avant un point d'arrêt uniquement le transporteur d'accumulation (3) est alimenté par de l'air projetée et après le point d'arrêt aucun transporteur ou bien éventuellement uniquement le transporteur de contiguïté (2) est alimenté par de l'air projetée.

15. Dispositif de transport d'après au moins une des revendications de 7 à 14, **caractérisé en ce qu'**un plan de transport du transporteur de contiguïté (2) et un plan de transport du transporteur d'accumulation (3) se trouvent dans un même plan (6).

16. Dispositif de transport d'après au moins une des revendications de 7 à 15, **caractérisé en ce que** le transporteur de contiguïté (2) et le transporteur d'accumulation (3) sont des transporteurs à bande.

17. Dispositif de transport d'après au moins une des revendications de 7 à 16, **caractérisé en ce que** le transporteur de contiguïté (2) et le transporteur d'accumulation (3) présentent respectivement un moyen d'actionnement (12, 13), le moyen d'actionnement (12) du transporteur de contiguïté pouvant être actionné à une vitesse initiale (V₂) supérieure par rapport au moyen d'actionnement du transporteur d'accumulation (3), un moyen d'accouplage (28), notamment un embrayage à roue libre (36) étant prévu pour l'accouplage du transporteur de contiguïté, pouvant être dépassé par le transporteur de contiguïté, au moyen d'actionnement (13) du transporteur d'accumulation (3).

18. Dispositif de transport d'après au moins une des revendications de 7 à 17, **caractérisé en ce qu'**un transporteur d'amenée (1) est prévu, pouvant être actionné de manière discontinue, lequel est disposé en amont du transporteur de contiguïté (2), le transporteur d'amenée ayant de préférence en commun la direction de transport avec le transporteur de contiguïté, et pouvant être actionné à une vitesse (V₁) variable, notamment dans le domaine de vitesse identique ou inférieur par rapport à la vitesse (V₂) du transporteur de contiguïté, et étant prévu un moyen de commande (60) pour la commande des vitesses (V₁, V₂) du transporteur d'amenée (1) et du transporteur de contiguïté (2), de telle manière que pour la distribution d'un objet par le transporteur d'amenée, celui-ci est au repos et que pour la transmission d'un objet du transporteur d'amenée au transporteur de contiguïté ceux-ci ont la même vitesse de transport (V₂), notamment une vitesse de transport supérieure par rapport au transporteur d'accumulation (3).

19. Dispositif de transport d'après au moins une des revendications de 7 à 18, **caractérisé en ce qu'**une surface de transport du transporteur de contiguïté (2) et du transporteur d'accumulation (3) est lisse.
